# EUROPEAN PATENT SPECIFICATION

(11) **EP 1 973 313 B1**
(45) Date of publication and mention of the grant of the patent: **16.12.2009**
(21) Application number: 07460007.3
(22) Date of filing: 23.03.2007
(51) Int. Cl.: H04M 1/04, B60R 11/02

(54) **Mobile phone holder, especially for a mechanical vehicle**
Fahrzeughalterung für ein Mobiltelefon
Support téléphone mobile pour voiture

(43) Date of publication of application: 24.09.2008
(73) Proprietor: Henryk Bury Mielec Sp.zo.o., 39-300 Mielec (PL)
(72) Inventor: Bury, Henryk, 39-300 Mielec (PL)
(74) Representative: Kaminski, Zbigniew

(56) References cited:
- US-A- 5 832 082
- US-A1- 2006 058 070
- US-B1- 6 438 229
- US-B1- 6 738 477

## Description

This invention relates to a mobile phone holder, especially for a mechanical vehicle, suitable for two-part mobile phones: a folder-type mobile phone and a slide-type mobile phone.

In the 20^{th} century the commonly used mobile phones were most often one-part devices with keypads and a display provided on their top surface.

However, in the 21^{st} century two-part mobile phones have been increasingly used. Both parts of such phones are either coupled by means of a hinge in case of folder-type mobile phones or the upper part is slideably mounted in the guiding elements of the lower part in case of slide-type mobile phones.

The lower part of a two-part mobile phone is provided with keypads on its top surface whereas the slideable or openable part is provided with a display.

The phones of this type have been so far provided with a holder as described by the German patent No. DE 19 621 014 C1. This holder, mounted in a mechanical vehicle, has a body, in which two side clamps are mounted slideably and crosswise; the said clamps, forced by a spring, press the mobile phone placed between them. The said holder is also provided with a mechanism to lock the clamps in a set position and with release buttons, which enable unlocking the clamps.

The US patent No. US 5 187 744 describes a mobile phone holder provided with two pairs of side clamps, wherein one clamp in each pair of clamps is slideably mounted in the main body of the holder and pressed by a spring, while the other clamp in each pair of clamps is mounted tiltably and also pressed by a spring. Thanks to a flexible four-point clamping the mobile phone sits in the holder more firmly.

The US patent No. US 5 832 080 describes a holder suitable for mobile phones provided with holes (called pilots) on their side surface.

This holder has a body wherein couplers are mounted and slide along a cam. In their upper position the said couplers are tilted. While a mobile phone is inserted into the holder, the couplers slide downwards along the cam, which guides them into the holes (pilots) and then locks them in this position.

An inconvenience of this holder is that it is suitable only for mobile phones, which have the holes (so-called pilots) on their side surfaces.

The published international PCT application No. W098-11747 describes a mobile phone holder, which main body has a cavity in its lower part and a spring coupler with a rotatably mounted clamping pin. Into the said cavity a lower part of a mobile phone can be suitably inserted. The said clamping pin, forced by the mobile phone being inserted into the holder, catches the upper part of the said mobile phone and presses towards the surface of the holder.

The US patent application No. US 2006/0058070 A1 describes a universal holder for mobile electronic devices, especially for a mechanical vehicle, the said holder consisting of an upper plate and a lower plate connected to each other, and another plate connected detachably to the upper plate and the lower plate and provided with spring side clamps. Between the clamps there is provided a slot, into which various hands-free devices may be inserted, the said devices including for example an in-built speaker, a sending-receiving unit, a GPS module or other electronic devices such as a mobile phone, PDA (personal digital assistant), a notebook, a smartphone, a palmtop or other communication device. This invention allows the user to mount a mobile phone or other hands-free device in the universal holder and use it for communication purposes.

The US patent No. US 5 832 082 describes a mobile phone holder that consists of a housing and a snap fastener. The housing is provided with a mount, in which a mobile phone is inserted. On its both sides the said mount has snap fasteners with protruding snap couplers engaging with cavities in the phone casing. When the phone is pressed towards the base of the mount, the said clamps fix and lock the phone in the holder. The body of the holder consists of two mounting parts coupled with each other. When the phone is pressed again, the couplers unlock the snap fastener and release the phone from the mount.

A major inconvenience of this holder is that it is necessary to make cavities in the side surfaces of the mobile phone casing and to adjust the distance between the snap couplers to the dimensions of a mobile phone. Moreover, the proposed snap fastener is a complex design consisting of a considerable number of parts, which affect both the reliability of the fastener and the costs of production.

The US patent No. US 6 738 477 B1 describes a mobile phone holder, which is provided with a double-action locking mechanism, which both presses and locks the mobile phone and removes it from the holder. This mechanism is provided with an element engaging with the rear side of the mobile phone and locking the phone in the holder. Pressing the rear side of the phone towards the said element of the mechanism results in locking the phone. To unlock the mobile phone, the side buttons, located on both sides of the one-part mechanism, shall be pressed.

The US patent No. US 6 438 229 B1 describes a radio-telephone holder designed to accommodate a mobile phone and equipped with a battery charger. The mobile phone is mounted in the holder by means of a coupler provided with contacts, which connect the battery to the charger when the phone sits in the holder.

A major inconvenience of all holders presented above is that they are not suitable for two-part mobile phones, wherein the thickness of the lower part, which is placed in the holder, is much smaller than the thickness of one-part mobile phones.

The object of this invention is to provide a mobile phone holder, especially for a mechanical vehicle, which is suitable for two-part mobile phones, both slide-type and folder-type ones, wherein the thickness of the lower part (main body) is much smaller than the thickness of one-part mobile phones used so far. This holder shall also be suitable for recently available one-part mobile phones, which thickness is significantly small and which cannot be provided with side holes (so-called pilots). According to the present invention the mobile phone holder shall be characterized by a universal applicability, i.e. shall be suitable for various types of mobile phones, even of different length.

The object of this invention is achieved by a mobile phone holder, especially for a mechanical vehicle, according to this invention, wherein the side clamps of the said holder are provided, on both sides, with two pins, which slide in the guiding grooves in the protrusion of the lower part of the body and make the said clamps move with a rotational motion towards the inside of the holder. Moreover, the side clamps are favorably provided with a pair of pins, which in the end phase of their motion go through a hole in the unlocking buttons thus locking the said side clamps in their close position and making the mobile phone lock in the holder. Pressing the unlocking buttons results in releasing the pins of the side clamps and unlocking the phone from the holder.

The unlocking buttons, are favourably provided with a hole which the pins go through. The said buttons are connected with each other with a wheel mounted rotatably in the lower part of the body and coupling both said unlocking buttons.

The upper part of the holder body , according to the invention, is favourably provided with a slot, in which a replaceable coupling insert is located; the said insert provided with an elastic locating means adjusted to the length of the mobile phone.

The performance tests of the mobile phone holder, according to the invention, proved it is guaranteed that even mobile phones of a very small thickness could sit in the holder firmly and that the holder can be used with various types of mobile phones.

The mobile phone holder, especially for a mechanical vehicle, according to this invention, is depicted in one embodiment in the accompanying drawings of which: Fig. 1 - is a perspective view of a mobile phone holder for phones of a smaller length; Fig. 2 - is a perspective view of a mobile phone holder for phones of a bigger length; Fig. 3 - is a perspective view of a holder with a two-part slide-type mobile phone; Fig. 4 - is a perspective view of a holder with a two-part folder-type mobile phone; Fig. 5 - is an exploded perspective view of a holder; Fig. 6 - is a cross-sectional view of the holder in a position ready for inserting a mobile phone; Fig. 7 - is a cross-sectional view of the holder with a mobile phone inserted and locked in it; Fig. 8 - is a detailed perspective view of the side clamp, which locks a mobile phone in the holder; Fig. 9 - is a part of the coupling/locking module with a side clamp in its initial position, ready for inserting a mobile phone, the said module in a position with a mobile phone inserted and locked in the holder.

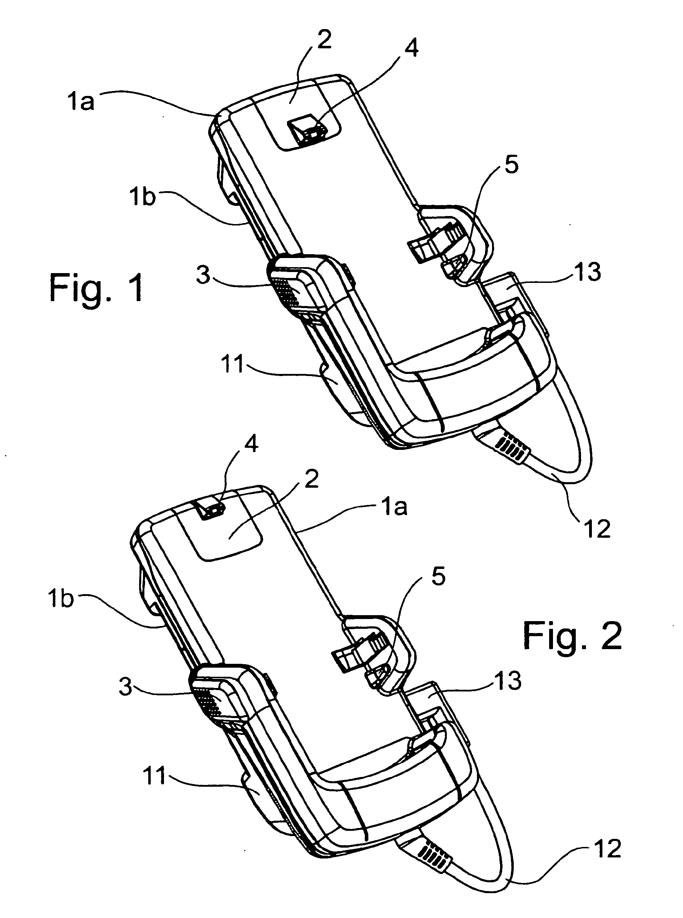

The holder depicted in Fig. 1 and Fig. 2 comprises a bipartite body 1a, 1b mounted to a dashboard of a mechanical vehicle, a coupling/locking module located within the said body and provided with the unlocking buttons 3, which release the lock and are located at both sides of the body, a replaceable coupling insert 2 mounted in the upper part of the body 1a and provided with an elastic locating means 4.

The Fig. 1 presents the holder with the coupling insert 2 provided in its lower part with an elastic locating means 4 and adjusted to a smaller length of a mobile phone. The Fig. 2 presents the said holder with the coupling insert 2 provided in its upper part with an elastic locating means 4 and adjusted to a bigger length of a mobile phone. The upper part of the body 1a is also provided on both sides with the protrusions 5, which set the crosswise location of the mobile phone in the holder.

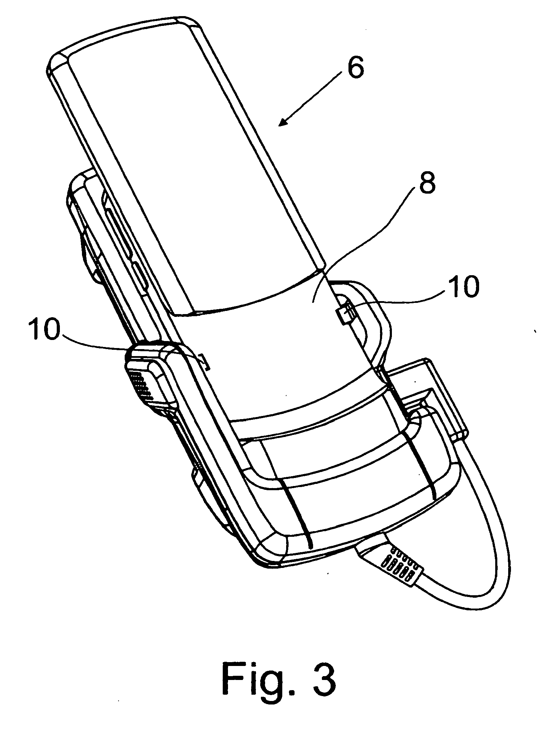

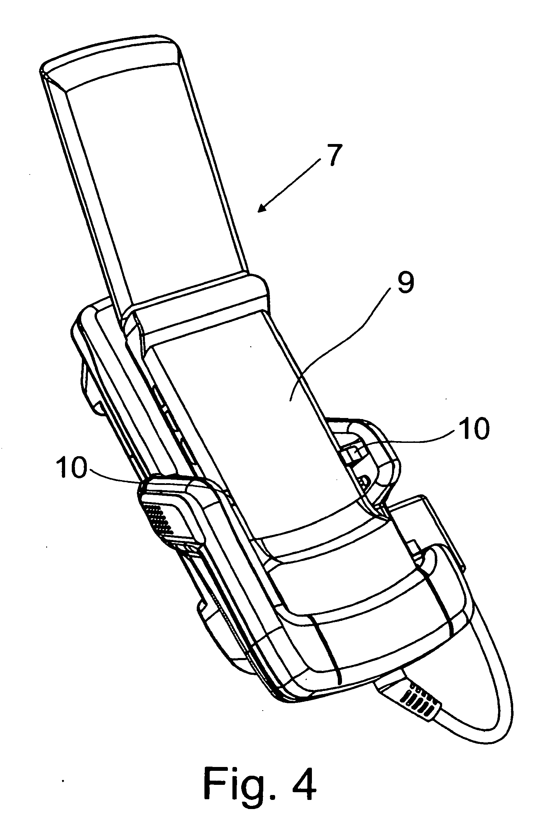

Fig. 3 presents the mobile phone holder with a two-part slide-type mobile phone 6 locked in the holder, while Fig. 4 presents the same mobile phone holder with a two-part folder-type mobile phone 7 locked in the holder. In both cases the lower base part 8 and 9, respectively, is clamped and protected from slipping out by the side clamps 10 of the coupling/locking module.

The mobile phone holder, according to the invention, presented in Fig. 1 to Fig. 4 is adapted to be mounted to a dashboard of a mechanical vehicle by means of a hanger. For this purpose the lower part of the body 1b is connected with a plate 11, which is provided with a socket for a multipin connector, not shown on the drawing. In case of other way of mounting the holder to the dashboard of a mechanical vehicle, the lower part of the body is mounted directly to the dashboard, for instance, by means of screws. Obviously, other mounting methods are also acceptable. The mobile phone holder, as depicted in Fig. 1 to Fig. 4, is provided with a cable 12 with a plug 13 on its end; the said cable connects the mobile phone to the electric power system of the mechanical vehicle.

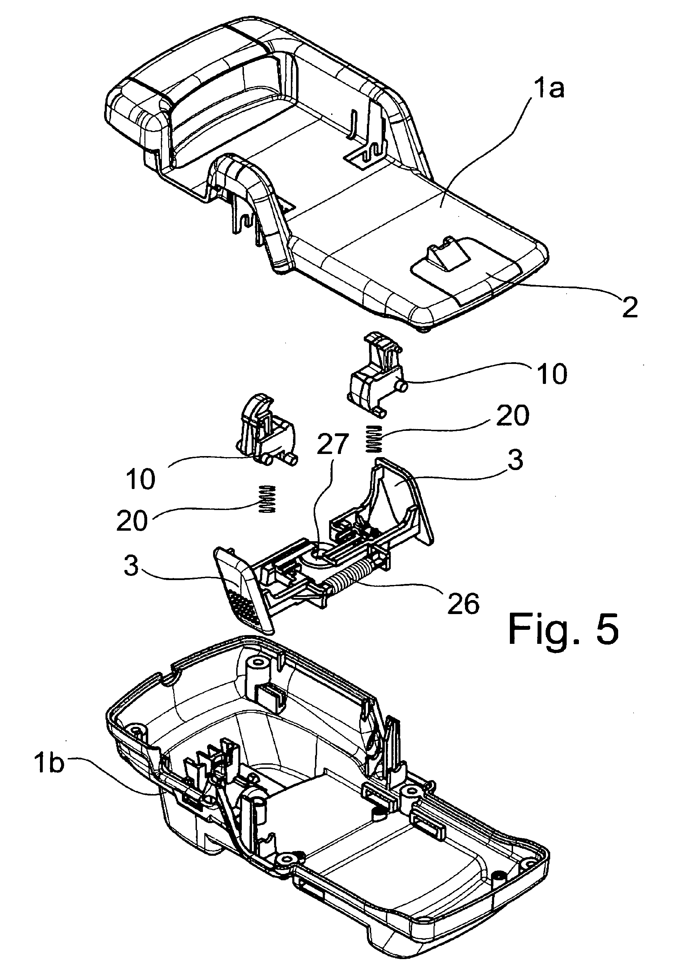

The coupling/locking module depicted in Fig. 5 to Fig. 10 is provided with two side clamps 10 on its both sides. Each clamp is an angle section, which main arm is provided with a tooth 14. In its upper part the clamp is provided with two pairs of pins 15 and 16, while the rear surface of the clamp has a guiding groove 17, which engages with a profiled protrusion 18 in the lower part of the body 1b. The clamp 10 is also provided with a hole 19 wherein the first spring 20 is mounted.

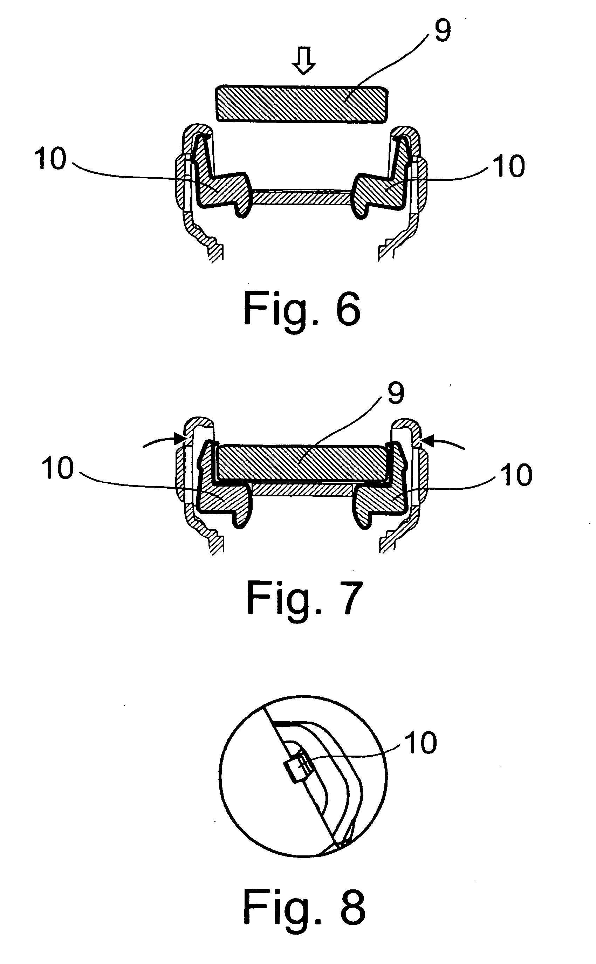

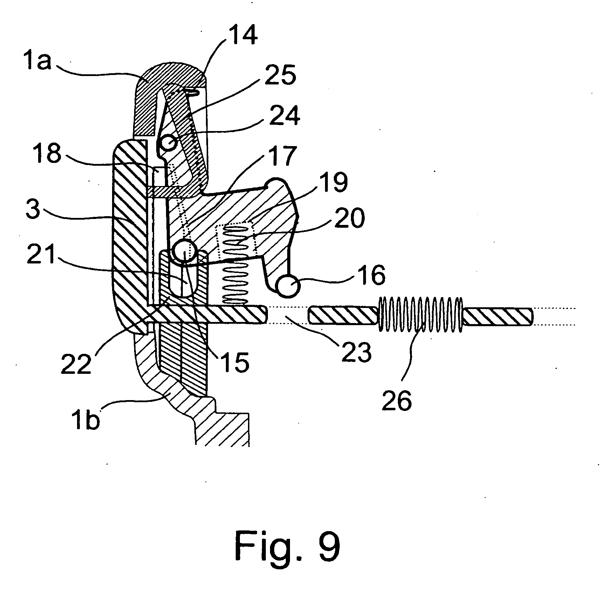

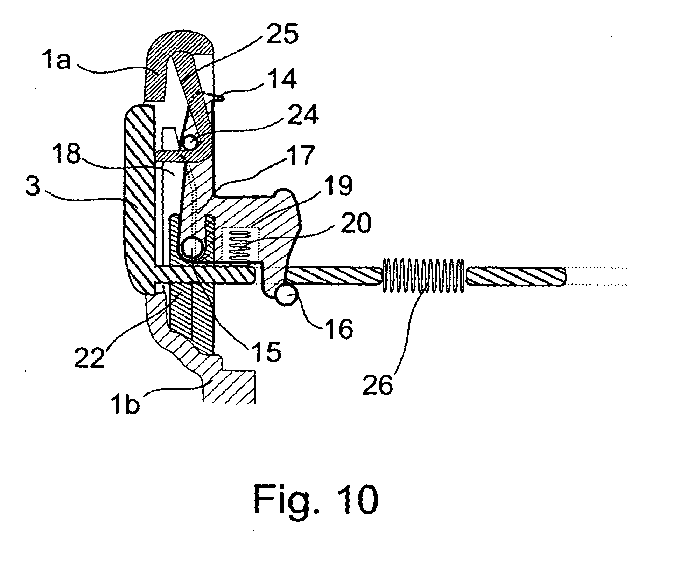

The pair of guiding pins 15, located on both sides, slides in the grooves 21 in the protrusions 22 of the lower part 1b of the body, while the other pair of guiding pins 16 goes through the hole 23 of the unlocking button 3 releasing the lock. The clamp 10 is additionally provided with a pin 24 protruding on one side, which slides along the cam 25 in the upper part 1a of the body. Both unlocking buttons 3, which release the lock and are located on both sides of the body, are coupled with each other by means of the second spring 26. In order to allow a concurrent motion of both unlocking buttons 3, which are connected to the wheel 27 by means of articulated joints. The coupling/locking module of the mobile phone holder operates as follows: in the initial position (Fig. 6 and Fig. 9) the side clamps 10 are tilted up by the first spring 20 and drawn aside. Such a position results from the force exerted by the pins 24 on the cam 25 and a concurrent position of the pins 15 in the groove 21. The lower base part 8 or 9 (Fig. 3 and Fig. 4) of the mobile phone, while being inserted into the holder, presses the horizontal arm of the side clamp 10, thus overcoming the force exerted by the first spring 20 and making the clamp 10 move downwards, as a result of the motion of the pins 15 sliding in the groove 21, and also making the clamp 10 concurrently rotate towards the inside of the holder, as a results of the force exerted by the cam 25 on the pin 24. In the end phase of this rotational motion the pins 16 of the clamp go through the holes 23 of the unlocking buttons 3, which in turn are pushed out by the second spring 26 and thus lock the side clamps 10 on both sides in such a position that the lower part of the two-part mobile phone is locked (Fig. 7 and Fig. 10).

To remove the mobile phone from the holder both unlocking buttons 3 are pressed towards the inside of the holder thus overcoming the pressure from the second spring 26. As a result the springs 20 lift the side clamps 10 to their initial position.

The holder according to the invention is suitable both for one-part mobile phones of a small thickness and for both types of two-part mobile phones: a slide-type and a folder-type. The mobile phones mounted in the holder according to the invention do not have to be provided with any additional holes (pilots) for mounting.

The invention is presented only in an exemplary embodiment, however, the patent protection covers also any changes and modifications to this embodiment provided that such changes and modifications are without departing from the scope of this invention.

## Claims

1. A mobile phone holder for a mechanical vehicle, having a bipartite body with side clamps (10), which are rotatably-slideably mounted in the said body, are provided with a tooth, and, thanks to cams (25) provided on an upper part (1a) of the holder body, move with a translational linear motion towards the inside of the holder and with a concurrent rotational motion towards the inside of the holder so that in the end phase of this motion the said clamps are locked thus locking also the mobile phone in the holder, whereas the phone is unlocked from the holder by means of unlocking buttons (3), coupled with each other, wherein the side clamps (10) are provided with a first pair of pins (15) on both sides, which are adapted to slide into guiding grooves (21) provided on a protrusion (22) of a lower part (1b) of the body and make the side clamps (10) move towards the inside of the holder, and with at least one pin (24), which engages with one of the cams (25) on the upper part (1a) of the body and makes the said side clamps (10) move rotationally towards the inside of the holder, whereby said clamps are provided with a second pair of pins (16), which in the end phase of their motion go through a hole (23) provided in the unlocking buttons (3) thus locking the said side clamps (10) in a position, which locks the mobile phone in the holder, whereas pressing the said unlocking buttons (3) results in releasing the second pair of pins (16) of the said side clamps (10) and unlocking the mobile phone form the holder.

2. The holder according to claim 1, wherein the unlocking buttons (3) are provided with a hole (23), which the pins (16) go through, and are connected with each other by means of a wheel (27) mounted rotatably in the lower part (1b) of the body and coupling both said unlocking buttons (3).

3. The holder according to claim 1 or claim 2, wherein the upper part (1a) of the holder body is provided with a slot, in which a replaceable coupling insert (2) is located and provided with an elastic locating means (4), which position is adjusted to the length of the mobile phone.

## Patentansprüche

1. Halter für Mobiltelefon, für Kraftfahrzeuge, ausgestattet mit dem zweiteiligen Körper, in dem zwei zweiseitige seitliche Halterungen dreh- und verschiebbar gesetzt werden (10), die auf dem oberen Arm mit dem Rasthacken ausgestattet sind, und die dank der Anwendung von Nocken (25), die sich auf dem oberen Teil (1a) mit dem Halterkörper befinden, in Bewegung gesetzt werden, die aus der geradlinigen Bewegung in Richtung des Inneren des Halters und aus der Drehbewegung in Richtung der Haltermitte besteht, wobei in der Endphase dieser Bewegung kommt zur Blockierung der seitlichen Halterungen und Befestigung des Mobiltelefons in dem Halter, Befreiung des befestigten Telefons aus dem Halter erfolgt hingegen dank der miteinander gekoppelten, Blockade lösenden Auslösetasten (3), kennzeichnend dadurch, dass die seitlichen Halterungen (10) des Halters mit dem ersten Paar der zweiseitigen Zapfen (15) ausgestattet sind, die zur Führung in den Führungsrillen (21) angepasst sind, die sich auf dem Vorsprung (22) des unteren Teils (1b) des Körpers befinden und diese seitlichen Halterungen (10) in Bewegung in Richtung des Inneren des Halters setzen und wenigstens in einen Zapfen (24), der mit einem von Nocken (25) des Vorsprungs des oberen Teils (1a) des Körpers zusammenarbeitet und der diese seitlichen Halterungen (10) in Drehbewegung in Richtung der Haltermitte setzt, wobei diese Halterungen mit dem zweiten Paar von Zapfen (16) ausgestattet sind, die in der Endphase ihrer Bewegung in Richtung des Inneren des Halters durch die Öffnung (23) übergehen, sich in den Tasten (3) befinden, welche die Blockade loslösen und die Blockade dieser seitlichen Halterungen (10) in ihrer Lage, die das Mobiltelefon in dem Halter blockiert, verursacht, wobei das Drücken der Tasten (3), welche die Blockade loslösen, das Loslösen des zweiten Paars von Zapfen (16) der seitlichen Halterungen (10) und das Loslösen des Telefons von dem Halter verursacht.

2. Der Halter, laut dem Patentanspruch 1, ist kennzeichnend dadurch, dass seine Tasten (3), welche die Blockade loslösen, mit einer Öffnung (23) für die Durchführung von Zapfen (16) der seitlichen Halterungen (10) ausgestattet sind und miteinander mittels eines kleinen, im unteren Teil (1b) des Körpers drehbar gesetzten Rads (27), verbunden sind, das die beiden Tasten (3), welche die Blockade loslösen, einkuppelt.

3. Der Halter, laut dem Patentanspruch 1 oder 2, ist kennzeichnend dadurch, dass der obere Teil (1a) seines Körpers mit einem Sitz ausgestattet ist, in dem eine tauschbare Kupplungseinlage (2) gesetzt wird, ausgestattet mit einem elastischen Fixierungsträger (4), dessen Lage der Länge des Mobiltelefons angepasst ist.

## Revendications

1. La base pour téléphones portables utilisable dans les véhicules, et équipée d'un double corps ayant un système rotatif de glissement ayant deux crans latéraux (10), équipée dans sa partie supérieure d'une griffe de fixation utile lors de l'utilisation des coudes (25) se trouvant dans la partie supérieure (1a) du corps de la base et qui bougent selon un mouvement linéaire et un mouvement rotatif vers l'intérieur de la base de façon à ce que, dans la phase finale du mouvement, les griffes latérales se bloquent et que le téléphone se retrouve fixé. Cependant, pour débloquer le téléphone il convient d'utiliser les deux boutons à pression de déblocage (3), caractéristiques en cela que, les crans latéraux (10) de la base sont équipés dans la première paire de tourillons des deux côtés (15) utilisés pour guider dans les fentes de conduite (21) se trouvant sur la protubérance (22) de la partie inferieure (1b) du corps et entraînant un mouvement de la griffe latérale (10) vers l'intérieur de la base et au moins dans un tourillon (24), travaillant avec un des coudes (25) de la protubérance de la partie supérieure (1a) du corps et entraînant le mouvement rotatif vers l'intérieur du cran latéral (10). Ces crans sont équipés dans la deuxième paire de tourillons (16) bloquant les mouvements vers l'intérieur par l'orifice dans la phase finale du mouvement vers l'intérieur de la base par les orifices (23) se trouvant dans les boutons (3) libérant le blocage et entraînant le blocage des crans latéraux (10) bloquant ainsi le téléphone dans la base. Une pression sur les boutons (3) libérant le blocage entraine la libération de la deuxième paire des tourillons (16) des crans latéraux (10) libérant ainsi le téléphone de la base.

2. La base selon l'avertissement nr1 est en cela caractéristique que ses boutons (3) libérant le blocage sont équipés d'orifices (23) pour accueillir les tourillons (16) des crans latéraux (10) et qui sont mutuellement réunis grâce à une roue fixée (27) dans la partie inférieure corps, couplant les deux boutons (3) de déblocage.

3. La base selon les avertissements nr1 ou nr2 est en cela caractéristique que la partie supérieure 2 (1a) de son corps est équipée d'une prise dans laquelle est fixée une semelle à cran interchangeable (2), elle-même équipée d'un cran flexible (4) plaçant le téléphone portable à l'endroit approprié.
